# EUROPEAN PATENT APPLICATION

(11) **EP 2 610 511 A1**
(43) Date of publication of application: **03.07.2013**
(21) Application number: 11195909.4
(22) Date of filing: 28.12.2011
(51) Int. Cl.: F16C 33/46, F16C 33/50, F16C 19/38, F03D 11/00, F16C 33/36

(54) **Cage and rolling element bearing**

(71) Applicant: Siemens Aktiengesellschaft, 80333 München (DE)
(72) Inventor: Soerensen, Steffen, 8382 Hinnerup (DK)

(57) **Abstract**

The invention relates to a rolling element type bearing, a bearing cage to be used in this bearing and to a wind turbine.

A bearing 1 comprises a first bearing shell 2 with a first surface and a second bearing shell 3 with a second surface. At least one rolling element 6 that is arranged between the bearing shells in a way, that the rolling element 6 is in contact with a part of the first surface being used as first raceway 4 and while the rolling element is in contact with a part of the second surface being used as second raceway 5 when the bearing is used. A bearing cage 7, which is prepared to maintain a certain predetermined distance between two adjacent rolling elements 6. The bearing cage 7 comprises at least one chamber, which at least partially surrounds the at least one rolling element 6. Whereby the chamber is open towards the first and the second surface to allow contact of the rolling element with the raceways 4, 5. Whereby the chamber comprise at least one distance element 8, 9, 10, 11, which is arranged outside the raceways 4, 5. Whereby the distance element 8, 9, 10, 11 is prepared to maintain a predefined position of the chamber between the surfaces of the bearing shells, thus the chamber is arranged in a contactless manner to the first and the second raceway 4, 5.

## Description

The invention relates to a rolling element type bearing, a bearing cage to be used in this bearing and to a wind turbine.

A bearing comprises a first bearing shell, a second bearing shell and a rolling element that is arranged between the first and the second bearing shell. The rolling elements separate the bearing shells and move along a raceway of the bearing shells when the bearing is in use. The rolling element is held and guided in a bearing cage.

The bearing cage is used in a bearing to maintain a certain distance between two adjacent rolling elements in the bearing. In addition it enables the movement of the rolling elements. Rolling elements, that are in the load zone, move due to the rotation of the bearing and roll along the raceway. Rolling elements that are not within the load zone are not moved by the rotation of the bearing. In this case the bearing cage helps to move the rolling elements in the bearing.

A bearing cage surrounds one, some or all rolling elements present in the bearing. A bearing cage provides a chamber for each rolling element that is open towards the raceways, so that the rolling element can get in contact with the raceways and can move along the raceways. A bearing cage comprises at least two cross bars that are arranged mainly parallel to the axis of rotation of the rolling element. And it comprises two side bars that connect the crossbars at their ends.

The bearing cage must be guided to maintain a predefined position of the chamber between the surfaces of the bearing shells. When the bearing cage surrounds two or more rolling elements, the bearing cage can be guided by the rolling elements. The bearing cage has a certain shape of the inner surface of its chamber that is in contact with the rolling element. The shape of the surface ensures that the rolling element can not slide out of the chamber at its open ends. So the position of the chamber and the rolling element are fixed in respect to each other. Thus the bearing cage can not slide towards one of the surfaces of the bearing shells.

To achieve this, the bearing cage must be machined within narrow tolerances and would typically be machined of steel, brass or bronze. This shows the disadvantage that the material is very cost expensive. In addition the cage must be machined out of a full piece. This leads to a loss of material and is time consuming and labor intensive.

The second solution to guide the bearing cage is to manufacture a cage that can be made of plastic and is completely or partially guided by noses that are in contact to the raceway and slide along the raceway when the bearing is in use.

EP1408248 describes a cage for a roller bearing that is made of a plastic material and comprises several segments. The cross-bars of the cage comprise noses to guide the segments on the raceway of the roller bearing.

This shows the disadvantage that the noses of the cross bars slide along the raceway of the bearing, which is problematic for grease lubricated bearings. The noses can remove the grease from a part of the raceway. This can lead to an improper lubrication, a higher friction and a higher wear at the rolling element and the raceways of the bearing.

It is the aim of the invention to provide a bearing with an improved bearing cage.

The aim is reached by the features of the independent claim. Preferred embodiments of the invention are described in the dependent claims.

A bearing comprises a first bearing shell with a first surface and a second bearing shell with a second surface. At least one rolling element that is arranged between the bearing shells in a way, that the rolling element is in contact with a part of the first surface being used as first raceway and while the rolling element is in contact with a part of the second surface being used as second raceway when the bearing is used. A bearing cage, which is prepared to maintain a certain predetermined distance between two adjacent rolling elements. The bearing cage comprises at least one chamber, which at least partially surrounds the at least one rolling element. Whereby the chamber is open towards the first and the second surface to allow contact of the rolling element with the raceways. Whereby the chamber comprise at least one distance element, which is arranged outside the raceways. Whereby the distance element is prepared to maintain a predefined position of the chamber between the surfaces of the bearing shells, thus the chamber is arranged in a contactless manner to the first and the second raceway.

In the bearing the rolling elements are guided by a bearing cage. The bearing cage comprises at least one rolling element. The rolling element is surrounded by the bearing cage preferably at four sides.

The four sides of the bearing cage provide a chamber around the rolling element. A top and a bottom side of the bearing cage are pointing to the first and the second bearing shell and are open, so that the rolling element can get in contact with the raceways.

The chamber comprises a distance element. The distance element maintains a certain predetermined distance of the chamber to the first and second bearing shell.

To maintain the distance the distance element can get in contact to the surface of the first and second bearing shell. The distance element slides along the surface when the bearing is used but the distance element of the chamber is arranged outside of the raceways of the bearing shells.

When the distance element slides along the surface of the bearing shells, it slides along an area that is outside of the raceways of the bearing shells.

Thus the area of a possible contact between the distance element and the bearing shells is not within the raceways of the rolling element. Thus the distance element is not influencing the lubrication of the rolling elements. Thus additional wear because of the uneven distribution of lubricant due to the influence of the distance element is avoided. Thus the lifetime of the bearing is enhanced. Thus service costs are reduced. Thus service time is reduced.

The rolling element shows an axis of rotation. Seen along the axis of rotation the distance elements are arranged before and after the rolling element.

If the bearing is a roller bearing with cylindrical or conical elements the distance element is preferably arranged close to plane ends of those roller-elements. Thus they are arranged outside of the raceways of the rolling elements.

In a preferred embodiment the bearing is a roller bearing.

Roller bearings have a very wide raceway of the rolling elements, as the rollers have a very large contact area between the rollers and the bearing shells.

Rollers are used in bearings that transfer a high load. In a bearing that transfers a high load, a continuous lubrication is very important. Defects in the lubrication can lead very fast to a failure of the bearing.

Thus an undisturbed lubrication is very important especially in roller bearings. Thus an undisturbed lubrication can be provided when the distance element is sliding along the bearing shell next to, and not within the raceways of the rollers. Thus the lubrication is maintained and is kept stable. Thus the wear is reduced and the lifetime of the bearing is enhanced. Thus service costs and even service time is reduced.

In a preferred embodiment the bearing is a tapered bearing.

Tapered bearings are used in situations where the bearing has to transfer high bending moments. In this situation a continuous lubrication within the bearing is important to avoid excessive wear in the bearing.

With a distance element that is arranged outside of the raceways the lubrication is continuous and undisturbed. Thus the lubrication is maintained. Thus the wear is reduced. Thus the lifetime of the bearing is enhanced. Thus service costs are reduced. Thus service time is reduced.

In a preferred embodiment the bearing cage comprises one chamber for each rolling element.

The bearing cage provides one chamber for each rolling element present in the bearing. Thus only one bearing cage is needed for a bearing. Thus only one bearing cage needs to be installed. Thus installation time is saved. Thus also service time is saved, when the bearing cage needs to be removed or exchanged during service.

Having one bearing cage that surrounds all rolling element in the bearing is especially advantageous in smaller bearings and bearings with a very good accessibility.

In a preferred embodiment the bearing cage is segmented.

Especially in larger bearings or in situations where the accessibility to the bearing is limited, installation or exchange of the whole bearing cage as one piece is difficult or impossible. In this situation a segmented bearing is very advantageous.

Thus single segments of the bearing cage can be exchanged. Thus heavy dismantling of the machinery can be avoided, as parts are easier to exchange or install then a closed loop of a bearing cage.

Thus service time is saved. Thus service personnel are saved.

Especially in bigger bearings the bearing cage can be quite heavy. The parts of a segmented bearing cage are lighter then a full bearing cage. Thus heavy machinery to lift and install a bearing cage is avoided. Thus installation time of the machinery is saved.

A bearing cage is prepared to be used in a bearing described, whereby the bearing cage comprises at least one chamber, which is prepared to at least partially surround at least one rolling element. Whereby the chamber comprises at least two cross bars and two side bars, that connect the cross-bars at their ends. Whereby the chamber comprise at least one distance element, which is arranged in a way that the distance element is arranged outside the raceways when the bearing cage is used in the bearing. Whereby the distance element is prepared to maintain a predefined position of the chamber between the surfaces of the bearing shells, thus the chamber is arranged in a contactless manner to the first and the second raceway.

Thus the bearing cage is not in contact with the raceways. Thus the lubrication along the raceways is not influenced by the distance element. Thus the lubrication stays evenly distributed on the raceways. Thus additional wear due to uneven distribution of the lubrication is avoided. Thus the live-time of the rolling element in the bearing is increased.

The distance elements can be detachably attached to the bearing cage. Thus the distance element can be exchanged during service. Thus the bearing cage can be reused. Thus material is saved.

In a preferred embodiment at least one side bar of the chamber comprises a distance element.

Thus the distance element is attached to the side part of the chamber that is seen along the axis of rotation of the rolling element before or after the rolling element. Thus the distance element is outside of the raceways of the rolling elements. Thus a contact between the distance element and the raceways of the first and second bearing shell is avoided.

The distance element can be a protrusion that reaches along a part of the length of the side bar. The distance element can also reach along the complete length of the side bar.

In a preferred embodiment the bearing cage is casted of bronze or brass or steel.

Bronze or brass or steel are very rigid materials. Thus the bearing cage made of brass or bronze or steel is rigid enough to withstand wear in the bearing. Thus the service interval for the bearing can be increased. Thus service costs are saved.

In a preferred embodiment the bearing cage is molded with a thermoplastic material.

The thermoplastic material can be a high grade fiber reinforced thermoplastic for example. One preferred thermoplastic material is known as "PEEK".

Thus the bearing cage is light weight. Thus no heavy machinery is needed for installation or exchange of the bearing cage.

In addition the material and the manufacturing of the bearing cage are cheap.

The bearing cage can be molded or casted together with the distance element in one piece. Thus production time and installation time is saved.

In a preferred configuration the bearing as described is used in a wind turbine.

Bearings are an important part in wind turbines. When a good lubrication is provided in the bearings, the bearing can run for a longer time until the next service is necessary. Thus the service interval can be enlarged. Thus service time is saved. Thus the energy production of the wind turbine is increased.

Especially wind turbines that are installed offshore can not be reached very easily. Reliability is very important for these wind turbines. When an improved lubrication can be provided, the reliability of the bearing is increased. Thus the break down time of the wind turbine is reduced. Thus the energy production is increased. And also maintenance costs are reduced.

In a preferred embodiment the wind turbine is a direct driven wind turbine.

Direct driven wind turbines have bearings that run with a very low speed and have to transfer high loads, as bending moments. In this case a sufficient lubrication of the bearing is very important. With the bearing and bearing cage invented the reliability of the lubrication is increased. Thus especially in a direct driven wind turbine the reliability of the bearing is increased. Thus the efficiency of the wind turbine is increased. Thus the cost of energy is lowered.

In a preferred embodiment the bearing is the main bearing of the wind turbine.

In a construction of a wind turbine where one bearing is used as a main bearing, this one main bearing transfers all the loads of the rotor. These are radial loads, axial loads and bending moments. In this case a very good lubrication of the bearing is necessary. With the bearing described the lubrication is significantly improved. Thus the reliability of the wind turbine is improved. Thus the efficiency of the wind turbine is improved. Thus the energy production is increased. Thus the costs of the energy produced are reduced.

The invention is shown in more detail by help of figures. The figures show a preferred configuration and do not limit the scope of the invention.
FIG 1 shows a tapered roller bearing with a bearing cage according to the claims.
FIG 2 shows a bearing cage for a roller bearing that can guide four rollers.

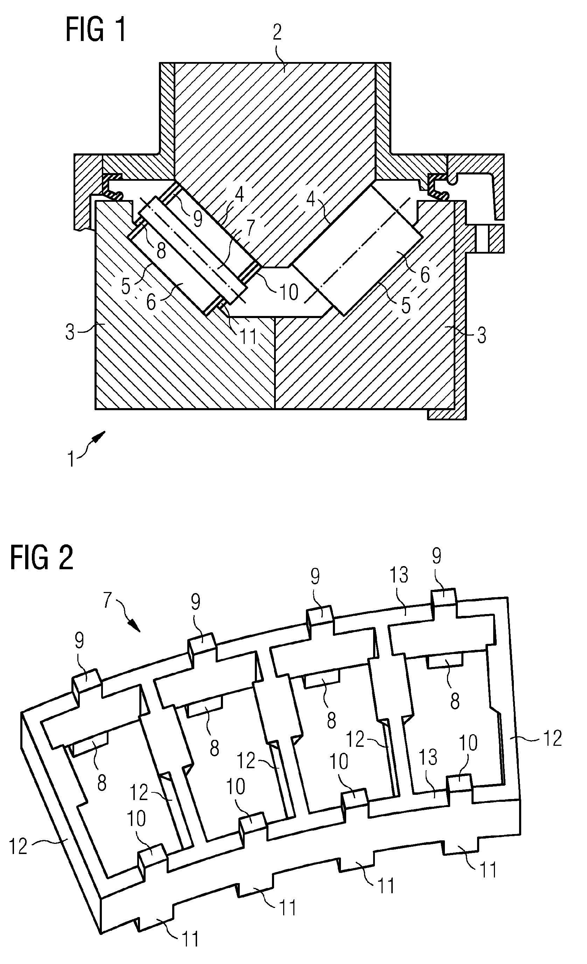

FIG 1 shows a tapered roller bearing with a bearing cage according to the claims.

The bearing 1 comprises a first bearing shell 2 and a second bearing shell 3. Two rows of rollers 6 are present between the bearing shells 2, 3. The rollers 6 roll along a part of the surface of the bearing shells that is called the raceway 4, 5 of the rollers 6. The rollers 6 are guided by a bearing cage 7 that partially surrounds the rollers 6.

The bearing cage 7 shows a cross bar that is arranged mainly parallel to the axis of rotation of the roller 6. This cross bar maintains the distance between two neighboring rollers and assists to move the rollers 6 that are not in the load zone and are therefore not moved by the rotation of the bearing itself.

In this embodiment the bearing cage 7 comprises noses as distance elements 8, 9, 10, 11 that connect to the surface of the bearing shells 2, 3. The noses slide along the surface of the bearing shells 2, 3 when the bearing 1 is rotating. The contact to the surface is outside of the raceway 4, 5 of the rollers 6, in this case, seen along the axis of rotation of the roller 6, before and after the roller 6.

At this position the noses will not influence the lubrication on the raceway 4, 5 of the rollers 6.

FIG 2 shows a bearing cage 7 for a roller bearing that can guide four rollers.

The bearing cage 7 shows four chambers provided to guide one roller each. In this embodiment the bearing cage 7 shows five cross bars 12 that are present between the rollers and two side bars 13 that connect the cross bars 12 at their ends.

The bearing cage can also be build for a different number of rolling elements, starting from one to all of the rolling elements in the bearing.

The side bars 13 show noses 8, 9, 10, 11 as distance elements that are provided to come in contact with the surface of the bearing shells. The noses 8, 9, 10, 11 maintain a certain distance between the cross bars 12 of the bearing cage 7 and the raceway of the rollers.

The distance elements 8, 9, 10, 11 are arranged outside the raceways of the rolling elements. They are arranged in a way that they contact the surface of the bearing shells outside of the raceways of the rolling elements.

## Claims

1. Bearing (1) comprising
- a first bearing shell (2) with a first surface,
- a second bearing shell (3) with a second surface,
- at least one rolling element (6), that is arranged between the bearing shells (2, 3) in a way, that the rolling element (6) is in contact with a part of the first surface being used as first raceway (4) and while the rolling element (6) is in contact with a part of the second surface being used as second raceway (5) when the bearing (1) is used,
- a bearing cage (7), which is prepared to maintain a certain predetermined distance between two adjacent rolling elements (6),
- whereby the bearing cage (7) comprises at least one chamber, which at least partially surrounds the at least one rolling element (6),
- whereby the chamber is open towards the first and the second surface to allow contact of the rolling element (6) with the raceways (4, 5),
- whereby the chamber comprise at least one distance element (8. 9. 10. 11), which is arranged outside the raceways (4, 5),
- whereby the distance element (8, 9, 10, 11) is prepared to maintain a predefined position of the chamber between the surfaces of the bearing shells (1, 2), thus the chamber is arranged in a contactless manner to the first and the second raceway (4, 5).

2. Bearing according to claim 1, wherein the bearing (1) is a roller bearing.

3. Bearing according to the claims 1 or 2, wherein the bearing (1) is a tapered bearing.

4. Bearing (1) according to one of the preceding claims,
wherein the bearing cage (7) comprises one chamber for each rolling element (6).

5. Bearing (1) according to one of the claims 1 to 3, wherein the bearing cage (7) is segmented.

6. Bearing cage (7), which is prepared to be used in a bearing according to one of the claims 1 to 5,
- whereby the bearing cage (7) comprises at least one chamber, which is prepared to at least partially surround at least one rolling element (6),
- whereby the chamber comprises at least two cross bars (12) and two side bars (13), that connect the cross-bars (12) at their ends,
- whereby the chamber comprise at least one distance element (8, 9, 10, 11), which is arranged in a way that the distance element (8, 9, 10, 11) is arranged outside the raceways (4, 5) when the bearing cage (7) is used in the bearing (1),
- whereby the distance element (8, 9, 10, 11) is prepared to maintain a predefined position of the chamber between the surfaces of the bearing shells (1, 2), thus the chamber is arranged in a contactless manner to the first and the second raceway (4, 5).

7. Bearing cage (7) according to claim 6, wherein at least one side bar (13) of the chamber comprises a distance element (8, 9, 10, 11).

8. Bearing cage (7) according to one of the claims 6 or 7,
wherein the bearing cage (7) is casted of bronze or brass or steel.

9. Bearing cage (7) according to one of the claims 6 or 7,
wherein the bearing cage (7) is molded with a thermoplastic material.

10. Wind turbine comprising a bearing (1) according to the claims 1 to 5.

11. Wind turbine according to claim 9, whereby the wind turbine is a direct driven wind turbine.

12. Wind turbine according to one of the claims 9 or 10, whereby the bearing is the main bearing of the wind turbine.
